# EUROPÄISCHE PATENTANMELDUNG

(11) **EP 4 385 704 A1**
(43) Veröffentlichungstag der Anmeldung: **19.06.2024**
(21) Anmeldenummer: 23207525.9
(22) Anmeldetag: 02.11.2023
(51) Int. Cl.: B29C 45/16, B60R 13/04, B60R 21/34, B62D 27/02, B62D 27/06, B62D 35/00, C09J 121/00, B60R 19/18

(54) **BAUTEIL UND VERFAHREN ZU DESSEN HERSTELLUNG**

(30) Priorität: 22.11.2022 DE 102022130810
(71) Anmelder: HELLA GmbH & Co. KGaA, 59552 Lippstadt (DE); HELLA Saturnus Slovenija d.o.o., 1001 Ljubljana (SI)
(72) Erfinder: Bouabdalli, Mohcyn, 79669 Zell im Wiesental (DE); Ducman, Gasper, 1000 Ljubljana (SI); Schmitz, Peter, 71134 Aidlingen (DE)
(74) Vertreter: Bringemeier, Ulrich Heinz

(57) **Zusammenfassung**

Die Erfindung betrifft ein Bauteil (1), welches erfindungsgemäß einen als ein Flächenbauteil ausgebildeten Grundkörper (2) aufweist, wobei auf mindestens einem Abschnitt (A1, A2, A3) einer Oberfläche einer Rückseite des Grundkörpers (2) ein elastisches Material (3) angeordnet ist.

Des Weiteren betrifft die Erfindung ein Verfahren zur Herstellung des Bauteils (1).

## Beschreibung

Die Erfindung betrifft ein Bauteil und Verfahren zu dessen Herstellung.

Aus dem Stand der Technik sind, wie in der WO 2019/055710 A1 beschrieben, Verbundstrukturen für eine lokale Versteifung bekannt. Eine Verstärkungsvorrichtung umfasst ein zusammengesetztes Verstärkungspflaster. Dieses Verstärkungspflaster umfasst eine erste Schicht mit einem ersten aktivierbaren Material, das in seinem grünen Zustand vor der Aktivierung flexibel und klebrig ist und eine zweite Schicht, entweder mit einem stabilisierenden Material, das als Netz, Film, chemische Beschichtung, faseriges oder kugelförmiges Material ausgebildet ist, oder mit einem zweiten aktivierbaren Material, das in planarem Kontakt mit dem aktivierbaren Material der ersten Schicht und entlang der Gesamtheit einer ersten Oberfläche des aktivierbaren Materials der ersten Schicht angeordnet ist. Optional umfasst das Verstärkungspflaster eine dritte Schicht, die ein Netz, einen Film, eine chemische Beschichtung oder ein zweites aktivierbares Material oder ein Trennpapier umfasst, das sich in planarem Kontakt mit dem aktivierbaren Material und entlang der gesamten Oberfläche der ersten Schicht oder der zweiten Schicht befindet, wobei bei Aktivierung des aktivierbaren Materials die zweite Schicht, die optionale dritte Schicht oder beide Schichten dem aktivierbaren Material Stabilität verleiht und das Schrumpfen des aktivierbaren Materials minimiert.

In der US 10,214,245 B2 werden eine Trennwand für Fahrzeuge und Verfahren zu deren Herstellung beschrieben. Die Trennwand umfasst ein aus einem Verbundmaterial gebildetes Wandteil und ein aus einem Verbundmaterial gebildetes Verstärkungsteil, das von der Mitte des unteren Abschnitts des Wandteils nach oben zu beiden Enden des Wandteils verläuft und integral mit dem Wandteil verbunden ist.

Der Erfindung liegt die Aufgabe zu Grunde, ein gegenüber dem Stand der Technik verbessertes Bauteil und ein gegenüber dem Stand der Technik verbessertes Verfahren zu dessen Herstellung anzugeben.

Die Aufgabe wird erfindungsgemäß gelöst durch ein Bauteil mit den Merkmalen des Anspruchs 1 und ein Verfahren zu dessen Herstellung mit den Merkmalen des Anspruchs 8.

Vorteilhafte Ausgestaltungen der Erfindung sind Gegenstand der Unteransprüche.

Ein erfindungsgemäßes Bauteil weist einen als ein Flächenbauteil ausgebildeten Grundkörper auf, wobei auf mindestens einem Abschnitt einer Oberfläche einer Rückseite des Grundkörpers ein elastisches, insbesondere zähelastisches, Material angeordnet ist, welches insbesondere stoffschlüssig mit dem Grundkörper verbunden ist. Das elastische Material ist beispielsweise ein Klebstoff. Dabei ist insbesondere vorgesehen, dass eine von der Rückseite des Grundkörpers abgewandte Rückseite des elastischen Materials freibleibend ist, d. h. unbedeckt ist, d. h. nicht mit einer anderen Komponente des Bauteils in Berührung ist. Das elastische Material ist somit insbesondere nicht zur Verbindung des Grundkörpers mit einer anderen Komponente des Bauteils vorgesehen. Das elastische Material bildet somit insbesondere eine äußere Schicht einer Rückseite des Bauteils.

Unter dem Begriff Flächenbauteil ist insbesondere zu verstehen, dass der Grundkörper großflächig und dünn ausgebildet ist, insbesondere dass eine Dicke des Grundkörpers wesentlich kleiner ist, insbesondere um ein Vielfaches kleiner ist, insbesondere um mindestens eine Größenordnung oder mehrere Größenordnungen kleiner ist, als eine Länge und/oder Breite und/oder als ein Durchmesser des Grundkörpers. Der Grundkörper weist somit die Rückseite und eine Vorderseite und insbesondere nur einen dünnen Umfangsrand auf. Der Grundkörper, insbesondere dessen Rückseite und/oder Vorderseite, kann gerade oder gebogen oder gewölbt ausgebildet sein.

Das Bauteil ist insbesondere ein Bauteil für ein Fahrzeug, insbesondere ein Anbauteil für ein Fahrzeug, insbesondere ein Exterieuranbauteil für ein Fahrzeug, d. h. zum Anbau an eine Außenseite des Fahrzeugs, beispielsweise einen Teil einer Außenhaut des Fahrzeugs bildend. Das Bauteil ist beispielsweise ein Frontbauteil, insbesondere eine Frontabdeckung, des Fahrzeugs, d. h. zum Anbau an eine Fahrzeugfront des Fahrzeugs vorgesehen. Das Bauteil ist insbesondere ein großflächiges Anbauteil, insbesondere ein großflächiges Dekoranbauteil. Die Rückseite des Bauteils und somit die Rückseite des Grundkörpers ist somit dem Fahrzeug zugewandt und eine Vorderseite des Bauteils und somit die Vorderseite des Grundkörpers vom Fahrzeug abgewandt und insbesondere einer äußeren Umgebung des Fahrzeugs zugewandt. Insbesondere bildet die Vorderseite des Grundkörpers die Vorderseite des Bauteils.

Der Grundkörper ist beispielsweise aus Kunststoff ausgebildet, insbesondere aus einem spröden Kunststoff.

Bei derartigen Bauteilen, insbesondere aus Kunststoff, die beispielsweise aufgrund ihrer Materialauswahl und/oder ihrer Herstellung zu einem spröden Bruchverhalten im Belastungsfall neigen, besteht bisher, insbesondere wenn sie in einem möglichen Kollisionsbereich des Fahrzeugs angeordnet sind, die Gefahr, dass sie brechen oder zersplittern und somit eine Verletzungsgefahr darstellen. Durch die erfindungsgemäße Lösung wird das Bruchverhalten des Bauteils erheblich verbessert. Vorteilhafterweise wird ein Belastungsniveau bis zu einem Bruch des Bauteils verbessert. Vorteilhafterweise fällt das Bauteil auch nach dem Bruch nicht auseinander, da Bruchstücke durch das elastische Material zusammengehalten werden. Das Bauteil ist somit durch das auf dem Grundkörper angeordnete elastische Material vorteilhafterweise duktiler und/oder durch dieses elastische Material wird ein Brechen des Bauteils verhindert oder zumindest ein Zerfallen des Bauteils nach dem Brechen verhindert oder zumindest reduziert. Dadurch kann insbesondere eine Einhaltung gesetzlicher Vorgaben, beispielsweise bezüglich Fußgängerschutz, sichergestellt werden.

Um das beschriebene Bruchverhalten zu erreichen, ist das elastische Material beispielsweise vollflächig oder als gerade oder geschwungene Linien oder Streifen oder als Gitterstruktur oder Netzstruktur auf dem mindestens einen Abschnitt der Oberfläche der Rückseite des Grundkörpers angeordnet.

Um das beschriebene Bruchverhalten zu erreichen, bildet der mindestens eine Abschnitt der Oberfläche der Rückseite des Grundkörpers, auf dem das elastische Material angeordnet ist, oder eine Gesamtheit der Abschnitte der Oberfläche der Rückseite des Grundkörpers, auf denen das elastische Material angeordnet ist, vorteilhafterweise den größten Teil der Oberfläche der Rückseite des Grundkörpers, beispielsweise einen gesamtem freien Teil der Oberfläche der Rückseite des Grundkörpers, welcher nicht durch andere Komponenten bedeckt ist. Solche Komponenten, die andere Teile der Oberfläche der Rückseite des Grundkörpers bedecken, sind beispielsweise Verbindungskomponenten zur Befestigung des Bauteils am Fahrzeug und/oder zur Verbindung anderer Fahrzeugkomponenten mit dem Bauteil.

In einem erfindungsgemäßen Verfahren zur Herstellung des Bauteils wird auf mindestens einem Abschnitt der Oberfläche der Rückseite des als Flächenbauteil, insbesondere aus Kunststoff, insbesondere aus einem spröden Kunststoff, ausgebildeten Grundkörpers ein Material aufgebracht, welches zumindest in einem vorgegebenen Endzustand elastisch ist, insbesondere zähelastisch. Es wird insbesondere stoffschlüssig mit dem Grundkörper verbunden. Das Material ist beispielsweise ein Klebstoff. Das Material, beispielsweise der Klebstoff, wird beispielsweise in einem flüssigen, zähflüssigen oder pastösen Zustand aufgebracht und härtet danach selbst, beispielweise durch eine stattfindende chemische Reaktion, oder durch weitere Maßnahmen, beispielsweise durch Licht-, Infrarot- und/oder UV-Bestrahlung und/oder durch Wärmeeinwirkung, bis der elastische Endzustand erreicht ist. Dabei ist insbesondere vorgesehen, dass keine andere Komponente des Bauteils mittels dieses Materials mit dem Grundkörper verbunden wird, d. h. eine von der Rückseite des Grundkörpers abgewandte Rückseite des im Endzustand elastischen Materials bleibt frei, d. h. unbedeckt, d. h. die Rückseite des Materials wird nicht mit einer anderen Komponente des Bauteils bedeckt, sie kommt somit mit keiner anderen Komponente des Bauteils in Berührung. Dieses Material ist somit insbesondere nicht zur Verbindung des Grundkörpers mit einer anderen Komponente des Bauteils vorgesehen. Das im Endzustand elastische Material bildet somit insbesondere eine äußere Schicht der Rückseite des Bauteils.

Das Material wird beispielsweise vollflächig oder als gerade oder geschwungene Linien oder Streifen oder als Gitterstruktur oder Netzstruktur auf den mindestens einen Abschnitt der Oberfläche der Rückseite des Grundkörpers aufgebracht.

Wie oben bereits beschrieben, bildet der mindestens eine Abschnitt der Oberfläche der Rückseite des Grundkörpers, auf den das Material aufgebracht wird, oder eine Gesamtheit der Abschnitte der Oberfläche der Rückseite des Grundkörpers, auf denen das Material aufgebracht wird, vorteilhafterweise den größten Teil der Oberfläche der Rückseite des Grundkörpers, beispielsweise einen gesamtem freien Teil der Oberfläche der Rückseite des Grundkörpers, welcher nicht durch andere Komponenten bedeckt ist. Solche Komponenten, die andere Teile der Oberfläche der Rückseite des Grundkörpers bedecken, sind beispielsweise Verbindungskomponenten zur Befestigung des Bauteils am Fahrzeug und/oder zur Verbindung anderer Fahrzeugkomponenten mit dem Bauteil.

Durch das erfindungsgemäße Verfahren werden die oben bereits beschriebenen Vorteile erzielt.

Ausführungsbeispiele der Erfindung werden im Folgenden anhand einer Zeichnung näher erläutert.

Dabei zeigt:

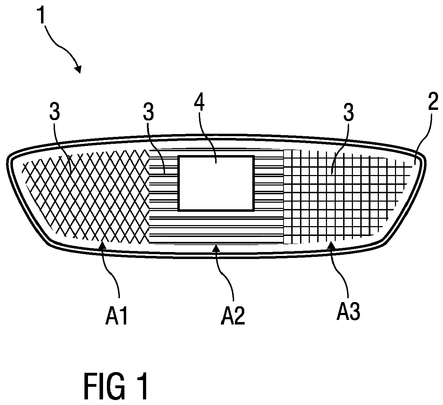

- Fig. 1: eine schematische Darstellung eines Bauteils.

Figur 1 zeigt beispielhaft eine schematische Darstellung eines Bauteils 1 in einer Draufsicht auf dessen Rückseite.

Im dargestellten Beispiel ist das Bauteil 1 ein Exterieuranbauteil für ein Fahrzeug, d. h. zum Anbau an eine Außenseite des Fahrzeugs vorgesehen. Das Bauteil 1 ist beispielsweise ein Frontbauteil, insbesondere eine Frontabdeckung, des Fahrzeugs, d. h. zum Anbau an eine Fahrzeugfront des Fahrzeugs vorgesehen. Das Bauteil 1 ist insbesondere ein großflächiges Anbauteil, insbesondere ein großflächiges Dekoranbauteil.

Das Bauteil 1 weist einen als ein Flächenbauteil ausgebildeten Grundkörper 2 auf, welcher aus Kunststoff, insbesondere aus einem spröden Kunststoff, ausgebildet ist. Auf mindestens einem Abschnitt A1, A2, A3 einer Oberfläche einer Rückseite des Grundkörpers 2 ist ein elastisches, insbesondere zähelastisches, Material 3 angeordnet. Im dargestellten Beispiel ist dieses elastische Material 3 ein Klebstoff. Es ist somit stoffschlüssig mit dem Grundkörper 2 verbunden. Dabei sind in Figur 1 beispielhaft drei Abschnitte A1, A2, A3 der Oberfläche der Rückseite des Grundkörpers 2 vorgesehen, auf welchen jeweils das elastische Material 3 angeordnet ist. Das elastische Material 3 kann beispielsweise vollflächig oder als gerade oder geschwungene Linien oder Streifen, beispielsweise in Zickzackform geschwungen, oder als Gitterstruktur oder Netzstruktur auf dem mindestens einen Abschnitt A1, A2, A3 der Oberfläche der Rückseite des Grundkörpers 2 angeordnet sein. In Figur 1 sind in den drei Abschnitten A1, A2, A3 beispielhaft einige dieser Varianten dargestellt, genauer gesagt die geraden Linien oder Streifen sowie zwei verschiedene Beispiele für die Gitterstruktur oder Netzstruktur.

Bei derartigen Bauteilen 1, wenn sie, wie bisher vorgesehen, nur den Grundkörper 2 aus sprödem Kunststoff umfassen und beispielsweise aufgrund ihrer Materialauswahl und/oder ihrer Herstellung zu einem spröden Bruchverhalten im Belastungsfall neigen, besteht bisher, insbesondere wenn sie in einem möglichen Kollisionsbereich des Fahrzeugs angeordnet sind, die Gefahr, dass sie brechen oder zersplittern und somit eine Verletzungsgefahr darstellen. Durch die hier beschriebene Lösung wird das Bruchverhalten des Bauteils 1 erheblich verbessert. Vorteilhafterweise wird ein Belastungsniveau bis zu einem Bruch des Bauteils 1 verbessert. Vorteilhafterweise fällt das Bauteil 1 auch nach dem Bruch nicht auseinander, da Bruchstücke durch das elastische Material 3 zusammengehalten werden. Das Bauteil 1 ist somit durch das auf dem Grundkörper 2 angeordnete elastische Material 3 vorteilhafterweise duktiler und/oder durch dieses elastische Material 3 wird ein Brechen des Bauteils 1 verhindert oder zumindest ein Zerfallen des Bauteils 1 nach dem Brechen verhindert oder zumindest reduziert.

Um das beschriebene Bruchverhalten zu erreichen, bildet der mindestens eine Abschnitt A1, A2, A3 der Oberfläche der Rückseite des Grundkörpers 2, auf dem das elastische Material 3 angeordnet ist, oder im hier dargestellten Beispiel eine Gesamtheit der Abschnitte A1, A2, A3 der Oberfläche der Rückseite des Grundkörpers 2, auf denen das elastische Material 3 angeordnet ist, vorteilhafterweise den größten Teil der Oberfläche der Rückseite des Grundkörpers 2, beispielsweise einen gesamtem freien Teil der Oberfläche der Rückseite des Grundkörpers 2, welcher nicht durch andere Komponenten 4 bedeckt ist. Solche Komponenten 4, die andere Teile der Oberfläche der Rückseite des Grundkörpers 2 bedecken, sind beispielsweise Verbindungskomponenten zur Befestigung des Bauteils 1 am Fahrzeug und/oder zur Verbindung anderer Fahrzeugkomponenten mit dem Bauteil 1. In Figur 1 ist beispielhaft und schematisch vereinfacht eine solche Komponente 4 oder ein Bereich für eine solche Komponente 4 am Bauteil 1 dargestellt.

Zur Herstellung des Bauteils 1 wird somit in einem entsprechenden Verfahren auf mindestens einem Abschnitt A1, A2, A3 oder, wie im dargestellten Beispiel, auf mehreren Abschnitten A1, A2, A3 der Oberfläche der Rückseite des als Flächenbauteil, insbesondere aus Kunststoff, insbesondere aus einem spröden Kunststoff, ausgebildeten Grundkörpers 2 ein Material 3 aufgebracht, welches zumindest in einem vorgegebenen Endzustand elastisch ist, insbesondere zähelastisch. Es wird insbesondere stoffschlüssig mit dem Grundkörper 2 verbunden. Im dargestellten Beispiel ist das Material 3, wie oben bereits erwähnt, ein Klebstoff. Das Material 3, hier der Klebstoff, wird beispielsweise in einem flüssigen, zähflüssigen oder pastösen Zustand aufgebracht und härtet danach selbst, beispielweise durch eine stattfindende chemische Reaktion, oder durch weitere Maßnahmen, beispielsweise durch Licht-, Infrarot- und/oder UV-Bestrahlung und/oder durch Wärmeeinwirkung, bis der elastische Endzustand erreicht ist.

Wie oben beschrieben und in Figur 1 beispielhaft in den verschiedenen Abschnitten A1, A2, A3 gezeigt, wird das Material 3 beispielsweise vollflächig oder als gerade oder geschwungene Linien oder Streifen oder als Gitterstruktur oder Netzstruktur auf den mindestens einen Abschnitt A1, A2, A3 oder den jeweiligen Abschnitt A1, A2, A3 der Oberfläche der Rückseite des Grundkörpers 2 aufgebracht.

### Bezugszeichenliste

- 1: Bauteil
- 2: Grundkörper
- 3: Material
- 4: Komponente

- A1, A2, A3: Abschnitt

## Patentansprüche

1. Bauteil (1),
**gekennzeichnet durch** einen als ein Flächenbauteil ausgebildeten Grundkörper (2), wobei auf mindestens einem Abschnitt (A1, A2, A3) einer Oberfläche einer Rückseite des Grundkörpers (2) ein elastisches Material (3) angeordnet ist.

2. Bauteil (1) nach Anspruch 1,
**dadurch gekennzeichnet, dass** das elastische Material (3) stoffschlüssig mit dem Grundkörper (2) verbunden ist.

3. Bauteil (1) nach einem der vorhergehenden Ansprüche,
**dadurch gekennzeichnet, dass** das elastische Material (3) vollflächig oder als gerade oder geschwungene Linien oder Streifen oder als Gitterstruktur oder Netzstruktur auf dem mindestens einen Abschnitt (A1, A2, A3) der Oberfläche der Rückseite des Grundkörpers (2) angeordnet ist.

4. Bauteil (1) nach einem der vorhergehenden Ansprüche,
**dadurch gekennzeichnet, dass** das elastische Material (3) ein Klebstoff ist.

5. Bauteil (1) nach einem der vorhergehenden Ansprüche,
**dadurch gekennzeichnet, dass** der Grundkörper (2) aus Kunststoff ist.

6. Bauteil (1) nach einem der vorhergehenden Ansprüche,
**dadurch gekennzeichnet, dass** der mindestens eine Abschnitt (A1, A2, A3) der Oberfläche der Rückseite des Grundkörpers (2), auf dem das elastische Material (3) angeordnet ist, oder eine Gesamtheit der Abschnitte (A1, A2, A3) der Oberfläche der Rückseite des Grundkörpers (2), auf denen das elastische Material (3) angeordnet ist, den größten Teil der Oberfläche der Rückseite des Grundkörpers (2) bildet.

7. Bauteil (1) nach einem der vorhergehenden Ansprüche,
**gekennzeichnet durch** eine Ausbildung als ein Anbauteil für ein Fahrzeug.

8. Verfahren zur Herstellung eines Bauteils (1) nach einem der vorhergehenden Ansprüche,
wobei auf mindestens einem Abschnitt (A1, A2, A3) der Oberfläche der Rückseite des als Flächenbauteil ausgebildeten Grundkörpers (2) ein Material (3) aufgebracht wird, welches zumindest in einem vorgegebenen Endzustand elastisch ist.

9. Verfahren nach Anspruch 8,
**dadurch gekennzeichnet, dass** das Material (3) vollflächig oder als gerade oder geschwungene Linien oder Streifen oder als Gitterstruktur oder Netzstruktur auf den mindestens einen Abschnitt (A1, A2, A3) der Oberfläche der Rückseite des Grundkörpers (2) aufgebracht wird.

10. Verfahren nach Anspruch 8 oder 9,
**dadurch gekennzeichnet, dass** als Material (3) ein Klebstoff aufgebracht wird.
